# EUROPÄISCHE PATENTSCHRIFT

(11) **EP 0 495 389 B1**
(45) Veröffentlichungstag und Bekanntmachung des Hinweises auf die Patenterteilung: **22.03.1995**
(21) Anmeldenummer: 92100242.4
(22) Anmeldetag: 09.01.1992
(51) Int. Cl.: B62D 7/14

(54) **Allradlenkung für ein Kraftfahrzeug**
All wheel steering for a motor vehicle
Direction toutes roues pour un véhicule automobile

(30) Priorität: 18.01.1991 DE 4101369
(43) Veröffentlichungstag der Anmeldung: 22.07.1992
(73) Patentinhaber: Adam Opel Aktiengesellschaft, 65428 Rüsselsheim (DE)
(72) Erfinder: Bausch, Paul, Dipl.-Ing. (FH), verstorben (DE)
(74) Vertreter: Bergerin, Ralf, Dipl.-Ing.

(56) Entgegenhaltungen:
- EP-A- 0 460 664
- PATENT ABSTRACTS OF JAPAN vol. 015, no. 212 (M-1118)30. Mai 1991
- PATENT ABSTRACTS OF JAPAN vol. 013, no. 528 (M-898)24. November 1989
- PATENT ABSTRACTS OF JAPAN vol. 013, no. 465 (M-882)20. Oktober 1989
- PATENT ABSTRACTS OF JAPAN vol. 013, no. 425 (M-873)21. September 1989

## Beschreibung

Die Erfindung betrifft eine Allradlenkung für ein Kraftfahrzeug, bei der die Hinterräder von einer Steuerelektronik über ein motorisches Stellglied mittels eines Spurhebels lenkbar ausgebildet sind und bei der das Stellglied eine durch einen Hubmagneten gegen die Kraft einer Feder betätigbare Sperre hat, um durch einen Ausfall der Steuerelektronik bedingte Lenkbewegungen auszuschließen. Eine solche Allradlenkung ist Gegenstand der EP-A-0 345 555.

Bei dieser bekannten Allradlenkung wird die Sperre durch Bestromung des Hubmagneten aus ihrer Sperrstellung in eine Lösestellung gebracht. Nur dann ist eine Lenkbewegung durch das Stellglied möglich. Dadurch soll verhindert werden, daß bei Ausfall der Energie oder bei einer sonstigen Störung die Hinterräder unerwünschte Lenkbewegungen ausführen können.

Auch in der JP-A-1 215 671 wird ein Raststift der Sperre erst dann in die Einraststellung bewegt, wenn der Hubmagnet der Sperre infolge eines Ausfalls des Steuersystems stromlos geschaltet ist.

Bei Allradlenkungen genügt für höhere Fahrgeschwindigkeiten ein Radeinschlag der Hinterräder von einem Grad in jeweils gleiche Richtung wie der Radeinschlag der Vorderräder. Beim Fahren in eine Parklücke, und damit bei geringen Fahrgeschwindigkeiten, sollen die Hinterräder zur Verringerung des Wendekreises jedoch stärker und gegensinnig zu den Vorderrädern einschlagen können. Meist wählt man hierbei einen Winkel von 4 Grad in die jeweilige Einschlagrichtung. Diese unterschiedlichen Erfordernisse kann man mittels eines Lenkwinkel-Positionsschalters am Lenkgetriebe erfüllen.

Da die Steuerelektronik in der Lage ist, die Hinterräder in dem zum Parkieren erforderlichen Maße zu verschwenken, ist es denkbar, daß infolge eines Fehlers der Elektronik ein solches starkes Verschwenken bei höheren Geschwindigkeiten eintritt, so daß eine nicht vom Fahrer herbeigeführte, stärkere Lenkbewegung eintreten würde. Diese Möglichkeit ist bei bekannten Allradlenkungen nicht ausgeschlossen. Sie sorgen lediglich dafür, daß bei Ausfall der Energie oder des Steuersystems die Hinterräder in Geradeausstellung arretiert werden.

Der Erfindung liegt die Aufgabe zugrunde, eine Allradlenkung der eingangs genannten Art so auszubilden, daß bei höheren Fahrgeschwindigkeiten die zum Parkieren nötigen, größeren Lenkausschläge der Hinterräder auch bei Störungen in der Steuerelektronik unmöglich gemacht sind.

Diese Aufgabe wird erfindungsgemäß dadurch gelöst, daß die Sperre zum Begrenzen der maximal möglichen Verschwenkbarkeit auf einen für höhere Fahrgeschwindigkeiten festgelegten, engen Schwenkbereich ausgebildet ist, die Sperre sich beim Fahren mit höherer Fahrgeschwindigkeit in Sperrstellung befindet und ihr Hubmagnet zum Lösen der Sperre im bestromten Zustand bei niedrigen Fahrgeschwindigkeiten ausgebildet ist.

Die erfindungsgemäße Allradlenkung unterscheidet sich von den vorbekannten Allradlenkungen dadurch, daß die Sperre sich beim Fahren mit höherer Fahrgeschwindigkeit in Sperrstellung befindet. Dadurch ist die maximal mögliche Verschwenkbarkeit auf den für höhere Fahrgeschwindigkeiten festgelegten, engen Schwenkbereich begrenzt. Ein größerer Schwenkbereich ist nur bei niedrigen Fahrgeschwindigkeiten möglich, wenn die Sperre durch Bestromung sich in Lösestellung befindet. Dank der Erfindung wird somit auf sehr einfache Weise ein ungewolltes, stärkeres Lenken der Hinterräder bei höheren Fahrgeschwindigkeiten ausgeschlossen.

Eine konstruktiv einfache Ausgestaltung der Erfindung besteht darin, daß die Sperre einen die Hubbewegung eines mit einer Stellstange des Stellgliedes fest verbundenen Kolbens begrenzenden, von der Feder zum Kolben hin vorgespannten und durch die Kraft des Hubmagneten vom Kolben weg beweglichen Sperrkörper hat.

Der Sperrkörper könnte beispielsweise ein Stift sein, der in eine die maximale Hubbewegung des Kolbens begrenzende Kolbennut greift. Besonders einfach ist die Gesamtanordnung gestaltet, wenn der Sperrkörper in Sperrstellung mit jeweils einem Anschlag in die Bewegungsbahn beider Stirnflächen des Kolbens greift und der Abstand beider Anschläge sowie die Länge des Kolbens so bemessen sind, daß der Kolben in Sperrstellung des Sperrkörpers die für die Lenkbewegung bei hohen Fahrgeschwindigkeiten erforderlichen geringen Verschiebebewegungen ausführen kann.

Das Fahrverhalten eines Kraftfahrzeuges mit der erfindungsgemäßen Allradlenkung ist auch bei Ausfall der Hinterradlenkung noch so gut wie bei einem modernen Fahrzeug ohne Hinterradlenkung, wenn die Hinterräder durch eine Rückstellfeder in eine Vorspurstellung vorgespannt sind.

Bei der Rückstellfeder kann es sich um eine Blattfeder, Druckfeder oder Gummifeder handeln, die irgendwo zwischen dem lenkbaren Achsschenkel und dem Lenker angeordnet ist. Besonders einfach ist die Allradlenkung jedoch gestaltet, wenn die Rückstellfeder zwischen dem Kolben und dem Gehäuse des Stellgliedes vorgesehen ist.

Eine andere, konstruktiv ebenfalls sehr einfache Möglichkeit, die Räder bei Ausfall der Steuerelektronik in eine sichere Geradeausstellung oder Vorspurstellung zu halten, in der nur noch geringe Lenkbewegungen möglich sind, besteht darin, daß die Sperre als Sperrkörper einen quer zum Kolben in eine Ausnehmung des Kolbens beweglichen Stift hat und die Ausnehmung um so viel breiter als der Stift ist, daß sich in Sperrstellungen die bei hohen Fahrgeschwindigkeiten erforderlichen geringen Lenkbewegungen erreichen lassen.

Die Räder schwenken bei Ausfall der Steuerelektronik selbsttätig in die sichere Geradeausstellung oder Vorspurstellung, wenn der Kolben durch zumindest eine Druckfeder in eine Mittelstellung vorgespannt ist.

Die Räder werden auf einfache Weise bei Nichtbestromung des Stellgliedes in der jeweiligen Stellung gehalten, wenn das Stellglied einen Elektromotor mit einer elektromagnetischen, im bestromten Zustand des Elektromotors geöffneten Bremse hat.

Die Druckfedern brauchen bei Ausfall der Steuerelektronik nicht die Reibkräfte des Getriebes und den Widerstand des Elektromotors zu überwinden, wenn gemäß einer anderen Weiterbildung der Erfindung das Stellglied eine bei Ausfall der Steuerelektronik geöffnete Kupplung zwischen dem Elektromotor und der Stellstange hat.

Konstruktiv besonders einfach ist das Stellglied ausgebildet, wenn der Elektromotor über einen Winkeltrieb ein Planetengetriebe antreibt und zwischen dem Planetengetriebe und der Stellstange die elektromagnetische Kupplung angeordnet ist.

Die Erfindung läßt zahlreiche Ausführungsmöglichkeiten zu. Zur weiteren Verdeutlichung ihres Grundprinzips sind zwei davon in der Zeichnung dargestellt und werden nachfolgend beschrieben. In ihr zeigen die
- Fig. 1: eine Draufsicht auf eine erfindungsgemäß gestaltete Hinterachse und ein Lenkgetriebe für eine Vorderachse,
- Fig. 2: eine Draufsicht auf einen für die Erfindung wesentlichen Bereich der Hinterachse,
- Fig. 3: ein teilweise geschnitten dargestelltes Stellglied eines Hinterrades der Hinterachse nach den Figuren 1 und 2,
- Fig. 4: einen Schnitt durch eine zweite Ausführungsform eines Stellgliedes.

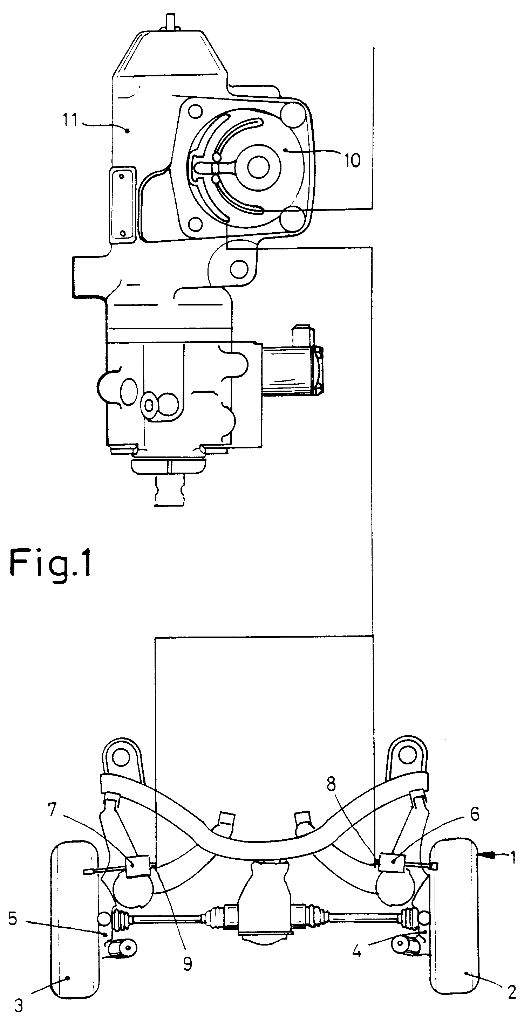

Die Figur 1 zeigt eine Hinterachse 1 mit angetriebenen Hinterrädern 2, 3. Die Hinterräder 2, 3 sind jeweils auf einem schwenkbar befestigten Achsschenkel 4, 5 angeordnet, so daß sie durch Bestromung eines Stellgliedes 6, 7 in die eine oder andere Richtung eingeschlagen werden können. Jedes Stellglied 6, 7 hat eine elektromagnetisch betätigbare Sperre 8, 9, welche bei einem größeren Lenkwinkeleinschlag der nicht gezeigten Vorderräder mittels eines Lenkwinkel-Positionsschalters 10 am Lenkgetriebe 11 derart ansteuerbar sind, daß sie sich dann in eine Lösestellung bewegen, in der maximale Lenkeinschläge der Hinterräder 2, 3 möglich sind. Statt der zwei Stellglieder 6, 7 könnte man auch nur ein einziges Stellglied vorsehen und mit ihm über eine Spurstange beide Hinterräder lenken.

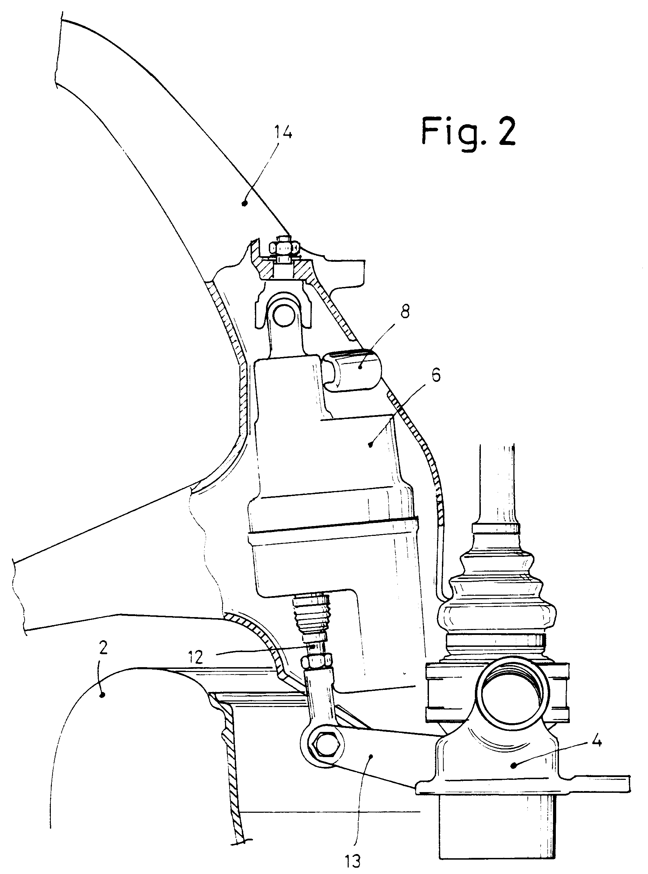

Die Figur 2 zeigt, daß das Stellglied 6 eine Stellstange 12 hat, die an einem Spurhebel 13 des Achsschenkels 4 angelenkt ist. Das Stellglied 6 ist mit seinem gegenüberliegenden Ende an einem Radführungselement 14 befestigt. Die Sperre 8 vermag den möglichen Verschiebeweg der Stellstange 12 zu begrenzen, wenn sie nicht bestromt ist.

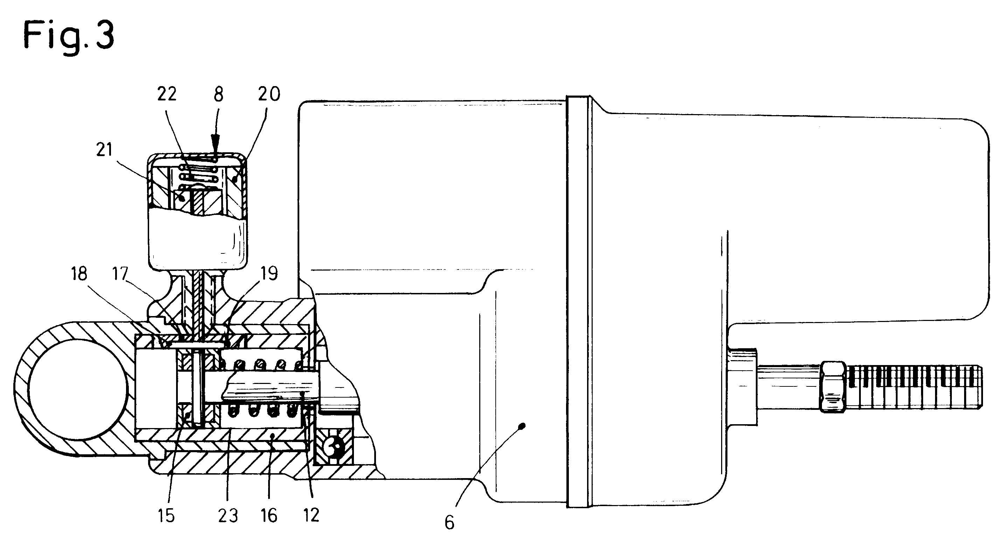

Die Schnittdarstellung gemäß Figur 3 zeigt, daß auf der Stellstange 12 ein Kolben 15 befestigt ist, der sich mit der Stellstange 12 in einer Hülse 16 verschiebt. Die Sperre 8 hat einen im zurückgezogenen Zustand gezeigten Sperrkörper 17, der zu beiden Seiten des Kolbens 15 einen Anschlag 18, 19 hat. Diese zurückgezogene Stellung wird erreicht, wenn durch einen Befehl des Lenkwinkel-Positionschalters 10 (Figur 1) eine Spule 20 der Sperre 8 bestromt und dadurch ein Anker 21 gegen die Kraft einer Feder 22 in der Zeichnung gesehen nach oben gezogen wird. Ist die Spule 20 nicht bestromt, dann drückt die Feder 22 den Anker 21 nach unten. Dadurch bewegt sich der Sperrkörper 17 zum Kolben 15 hin, so daß seine beiden Anschläge 18, 19 den maximal möglichen Hub des Kolbens 15 begrenzen.

Wird die Spule 20 bestromt, dann befindet sich der Sperrkörper in der dargestellten, zurückgezogenen Stellung. Der Kolben 15 kann sich deshalb über die Anschläge 18, 19 hinaus bewegen. Kommt es im Stellglied 6 und in der Sperre 8 zu einem Energieausfall, dann vermag eine Rückstellfeder 23 den Kolben 15 und damit auch die Stellstange 12 so weit in der Zeichnung gesehen nach links zu verschieben, bis der Kolben 15 gegen den Anschlag 18 anliegt und dadurch das Hinterrad 2 in eine Vorspurstellung geschwenkt ist. Schrägen an den beiden Außenkanten des Sperrkörpers 17 ermöglichen es dem Kolben 15, den Sperrkörper 17 zunächst hochzudrücken, damit er zwischen die Anschläge 18, 19 gelangen kann.

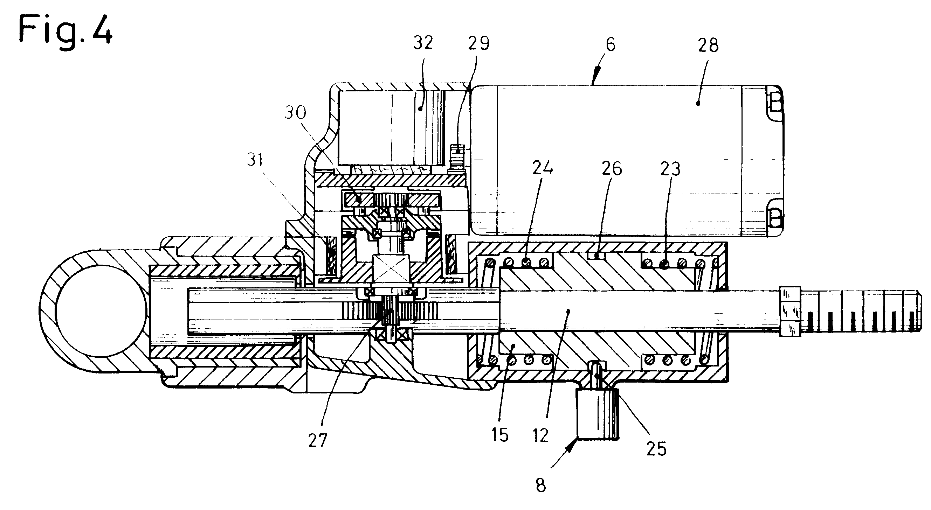

Bei der Ausführungsform gemäß Figur 4 wird der Kolben 15 der Stellstange 12 durch zwei Rückstellfedern 23, 24 in einer Mittelstellung gehalten. Die Sperre 8 hat als Sperrkörper einen Stift 25, der in eine durch eine umlaufende Nut gebildete Ausnehmung 26 des Kolbens 15 greift. Die Ausnehmung 26 ist um so viel breiter als der Stift 25, daß bei nicht bestromter Sperre 8, wenn also die Sperre 8 sich in Sperrstellung befindet, Lenkbewegungen von etwa einem Grad in beide Richtungen möglich sind. Bei hohen Geschwindigkeiten können also bei eingerückter Sperre 8 nur die dann erforderlichen Lenkbewegungen der Hinterachse und nicht die beim Parkieren notwendigen großen Lenkbewegungen erfolgen.

Die Stellstange 12 ist bei der Ausführungsform nach Figur 4 als Zahnstange ausgebildet, in die ein Ritzel 27 greift. Dieses Ritzel 27 wird von einem Elektromotor 28 über einen Winkeltrieb 29 und über ein Planetengetriebe 30 angetrieben. Eine elektromagnetische Kupplung 31 trennt im nicht bestromten Zustand die Verbindung des Ritzels 27 mit dem Planetengetriebe 30. Wenn der Elektromotor 28 nicht bestromt ist, dann blockiert eine elektromagnetische Bremse 32 das Stellglied 6, so daß keine Lenkbewegungen möglich sind.

## Patentansprüche

1. Allradlenkung für ein Kraftfahrzeug, bei der die Hinterräder (2, 3) von einer Steuerelektronik über ein motorisches Stellglied (6, 7) mittels eines Spurhebels (3) lenkbar ausgebildet sind und bei der das Stellglied (6, 7) eine durch einen Hubmagneten (20, 21) gegen die Kraft einer Feder (22) betätigbare Sperre (8) hat, um durch einen Ausfall der Steuerelektronik bedingte Lenkbewegungen auszuschließen, dadurch gekennzeichnet, daß die Sperre (8) zum Begrenzen der maximal möglichen Verschwenkbarkeit auf einen für höhere Fahrgeschwindigkeiten festgelegten, engen Schwenkbereich ausgebildet ist, die Sperre sich beim Fahren mit höherer Fahrgeschwindigkeit in Sperrstellung befindet und ihr Hubmagnet (20, 21) zum Lösen der Sperre (8) im bestromten Zustand bei niedrigen Fahrgeschwindigkeiten ausgebildet ist.

2. Allradlenkung nach Anspruch 1, dadurch gekennzeichnet, daß die Sperre (8) einen die Hubbewegung eines mit einer Stellstange (12) des Stellgliedes (6) fest verbundenen Kolbens (15) begrenzenden, von der Feder (22) zum Kolben (15) hin vorgespannten und durch die Kraft des Hubmagneten vom Kolben (15) weg beweglichen Sperrkörper (17) hat.

3. Allradlenkung nach Anspruch 2, dadurch gekennzeichnet, daß der Sperrkörper (17) in Sperrstellung mit jeweils einem Anschlag (18, 19) in die Bewegungsbahn beider Stirnflächen des Kolbens (15) greift und der Abstand beider Anschläge (18, 19) sowie die Länge des Kolbens (15) so bemessen sind, daß der Kolben (15) in Sperrstellung des Sperrkörpers (17) die für die Lenkbewegung bei hohen Fahrgeschwindigkeiten erforderlichen geringen Verschiebebewegungen ausführen kann.

4. Allradlenkung nach zumindest einem der vorangehenden Ansprüche, dadurch gekennzeichnet, daß die Hinterräder (2, 3) durch eine Rückstellfeder (23) in eine Vorspurstellung vorgespannt sind.

5. Allradlenkung nach Anspruch 4, dadurch gekennzeichnet, daß die Rückstellfeder (23) zwischen dem Kolben (15) und dem Gehäuse des Stellgliedes (6) vorgesehen ist.

6. Allradlenkung nach zumindest einem der vorangehenden Ansprüche, dadurch gekennzeichnet, daß die Sperre als Sperrkörper einen quer zum Kolben in eine Ausnehmung (26) des Kolbens (15) beweglichen Stift (25) hat und die Ausnehmung (26) um so viel breiter als der Stift (25) ist, daß sich in Sperrstellungen die bei hohen Fahrgeschwindigkeiten erforderlichen geringen Lenkbewegungen erreichen lassen.

7. Allradlenkung nach zumindest einem der vorangehenden Ansprüche, dadurch gekennzeichnet, daß der Kolben (15) durch zumindest eine Druckfeder (23, 24) in eine Mittelstellung vorgespannt ist.

8. Allradlenkung nach zumindest einem der vorangehenden Ansprüche, dadurch gekennzeichnet, daß das Stellglied (6) einen Elektromotor (28) mit einer elektromagnetischen, im bestromten Zustand des Elektromotors (28) geöffneten Bremse (32) hat.

9. Allradlenkung nach zumindest einem der vorangehenden Ansprüche, dadurch gekennzeichnet, daß das Stellglied (6) eine bei Ausfall der Steuerelektronik geöffnete Kupplung (31) zwischen dem Elektromotor (28) und der Stellstange (12) hat.

10. Allradlenkung nach zumindest einem der vorangehenden Ansprüche, dadurch gekennzeichnet, daß der Elektromotor (28) über einen Winkeltrieb (29) ein Planetengetriebe (30) antreibt und zwischen dem Planetengetriebe (30) und der Stellstange (12) die elektromagnetische Kupplung (31) angeordnet ist.

## Claims

1. All-wheel steering for a motor vehicle, in which the rear wheels (2, 3) are constructed for steering by an electronic control via a motorised servo member (6, 7) by means of a tracking lever (3) and in which the servo member (6, 7) has a blocking means (8), operated by a lifting magnet (20, 21) against the force of a spring (22), so as to prevent steering movements, caused by the control electronics failing, **characterised** in that for limiting the maximum possible pivoting movement the blocking means (8) is constructed for a narrow pivoting area intended for higher speeds, at higher travel speeds the blocking means is in the blocked position and its lifting magnet (20, 21) is constructed to release the blocking means (8) when supplied with current at low driving speeds.

2. All-wheel steering according to claim 1, **characterised** in that for limiting the lifting movement of a piston (15) the blocking means (8) has a blocking member (17) firmly connected to a servo rod (12) of the servo member (6), which is biased by the spring (22) towards the piston (15) and through the force of the lifting magnet is moved away from the piston (15).

3. All-wheel steering according to claim 2, **characterised** in that in the blocking position the blocking member (17) engages with a stop (18, 19) respectively in the movement path of both end surfaces of the piston (15) and the distance of both stops (18, 19) as well as the length of the piston (15) are dimensioned in such a way that when the steering member (17) is in the blocking position the piston (15) is able to carry out the slight displacements required for the steering movement at high speeds.

4. All-wheel steering according to at least one of the preceding claims, **characterised** in that the rear wheels (2, 3) are biased by a return spring (23) into a toe-in position.

5. All-wheel steering according to claim 4, **characterised** in that the return spring (23) is provided between the piston (15) and the housing of the servo member (6).

6. All-wheel steering according to at least one of the preceding claims, **characterised** in that the blocking member has a pin (25) which moves transverse to the piston in a recess (26) of the piston (15) and the recess (26) is wider than the pin (25) by so much that it is possible in the blocking positions to achieve the slight steering movements which are necessary at high speeds.

7. All-wheel steering according to at least one of the preceding claims, **characterised** in that the piston (15) is biased in a centre position by at least one pressure spring (23, 24).

8. All-wheel steering according to at least one of the preceding claims, **characterised** in that the servo member (6) has an electric motor (28) with an electromagnetic brake (32) which is open when the electric motor (28) is supplied with current.

9. All-wheel steering according to at least one of the preceding claims, **characterised** in that the servo member (6) has a clutch (31) between the electric motor (28) and the servo rod (12) which is open when the control electronics fail.

10. All-wheel steering according to at least one of the preceding claims, **characterised** in that the electric motor (28) drives a planetary gear (30) via a V-drive and between the planetary gear (30) and the servo rod (12) there is arranged the electromagnetic clutch (31).

## Revendications

1. Direction toute roues directrices pour un véhicule automobile, dans laquelle les roues arrières (2, 3) sont agencées de manière à pouvoir être orientées par une électronique de commande par l'intermédiaire d'un organe de réglage ou actionneur (6, 7) à moteur et d'un levier (3) de fusée de roue et dans laquelle l'actionneur (6, 7) comporte un moyen de verrouillage (8) qui est actionné au moyen d'un électro-aimant (20, 21) à l'encontre de la force d'un ressort (22) afin d'empêcher des manoeuvres de la direction résultant d'une défaillance de l'électronique de commande, caractérisé par le fait que le moyen de verrouillage (8) est agencé de manière à limiter le pivotement maximal possible à une zone de pivotement étroite définie pour des vitesses de déplacement élevées, par le fait qu'aux vitesses de déplacement élevées, le moyen de verrouillage se trouve en position de verrouillage et que son électro-aimant (20, 21) est agencé de manière à libérer le moyen de verrouillage (8) aux faibles vitesses de déplacement, lorsque celui-ci est alimenté en courant.

2. Direction toutes roues directrices selon la revendication 1, caractérisée par le fait que le moyen de verrouillage (8) comporte un élément de verrouillage (17) qui limite la course de déplacement d'un piston (15) lié rigidement à une tige de commande (12) de l'actionneur (6), est repoussé par le ressort (22) en direction du piston (15) et peut être éloigné dudit piston (15) par la force de l'électro-aimant.

3. Direction toutes roues directrices selon la revendication 2, caractérisée par le fait qu'en position de verrouillage, l'élément de verrouillage (17) vient en prise avec chaque fois une butée (18, 19) placée sur la trajectoire de déplacement des deux faces frontales du piston (15) et par le fait que la distance entre les deux butées (18, 19) et la longueur du piston (15) sont telles que le piston (15) puisse exécuter les faibles déplacements nécessaires à la manoeuvre de la direction aux vitesses élevées lorsque l'élément de verrouillage (17) est en position de verrouillage.

4. Direction toutes roues directrices selon au moins une des revendications précédentes, caractérisée par le fait que les roues arrières (2, 3) sont précontraintes dans une position de pincement vers l'avant au moyen d'un ressort de rappel (23).

5. Direction toutes roues directrices selon la revendication 4, caractérisée par le fait que le ressort de rappel (23) est prévu entre le piston (15) et le boîtier de l'actionneur (6).

6. Direction toutes roues directrices selon au moins une des revendications précédentes, caractérisée par le fait que le moyen de verrouillage comporte comme élément de verrouillage un doigt (25) qui est mobile transversalement au piston dans un évidement (26) dudit piston (15) et par le fait que la largeur de l'évidement (26) est supérieure à celle du doigt (25) de manière à permettre, en position de verrouillage, les faibles déplacements nécessaires à la manoeuvre de la direction aux vitesses élevées.

7. Direction toutes roues directrices selon au moins une des revendications précédentes, caractérisée par le fait que le piston (15) est précontraint dans une position médiane par au moins un ressort de compression (23, 24).

8. Direction toutes roues directrices selon au moins une des revendications précédentes, caractérisée par le fait que l'actionneur (6) est un moteur électrique (28) pourvu d'un frein (32) électro-magnétique qui est ouvert lorsque le moteur (28) électrique est alimenté en courant.

9. Direction toutes roues directrices selon au moins une des revendications précédentes, caractérisée par le fait que l'actionneur (6) comporte un mécanisme d'accouplement (31) qui est disposé entre le moteur électrique (28) et la tige de commande (12) et est ouvert lorsque l'électronique de commande est défaillante.

10. Direction toutes roues directrices selon au moins une des revendications précédentes, caractérisée par le fait que le moteur (28) électrique entraîne un engrenage planétaire (30) par l'intermédiaire d'un engrenage conique (29) et que le mécanisme d'accouplement (31) électro-magnétique est disposé entre l'engrenage planétaire (30) et la tige de commande (12).
